# EUROPEAN PATENT APPLICATION

(11) **EP 3 859 652 A1**
(43) Date of publication of application: **04.08.2021**
(21) Application number: 20154570.4
(22) Date of filing: 30.01.2020
(51) Int. Cl.: G06Q 50/06, G06Q 10/06

(54) **TECHNIQUE FOR TRUSTLESS CRYPTOGRAPHIC VERIFICATION OF ENERGY ALLOCATIONS**

(71) Applicant: elblox AG, 4600 Olten (CH)
(72) Inventor: SCHÖNENBERGER, Yves, 3013 Bern (CH)
(74) Representative: Röthinger, Rainer

(57) **Abstract**

The present disclosure relates to a cryptographic approach that enables trustless verification of energy allocations between energy consumption sites and energy production sites. An apparatus of the present disclosure is configured to obtain energy allocations relating to a predetermined period of time, wherein an individual energy allocation allocates a specific amount of energy (i) to energy consumption at an individual energy consumption site during the predetermined period of time and (ii) to energy production at an individual energy production site during the predetermined period of time. The apparatus is further configured to calculate, in an isolated execution environment, IEE, leaves of a Merkle tree from the obtained energy allocations, to calculate a Merkle root from the leaves of the Merkle tree, and to generate a data set including the Merkle root. Moreover, the apparatus is configured to output the data set to a blockchain or other data storage.

## Description

### Technical Field

The present disclosure generally relates to energy allocations between energy production sites and energy consumption sites. In particular, the present disclosure relates to a cryptographic approach that permits a trustless verification of such energy allocations while, at the same time, taking into account privacy considerations.

### Background

The demand for "green" electric energy from renewable sources such as photovoltaic energy and wind energy is constantly increasing. Due to the increasing demand, "green" energy has become a scarce resource that has to be identifiable in a reliable and unambiguous way and that, at the same time, requires a flexible allocation to such uses that have the highest utility or that are closest to the production sites. The first aspect can be addressed by smart electronic energy metering, and the second aspect requires efficient energy allocation techniques. Energy allocation has to take into account the highly granular and fluctuating nature of "green" energy production at a large number of micro sites, such as photovoltaic cells installed on rooftops and operated by house owners.

Today's energy distribution solutions typically aggregate energy consumption and production at a monthly time resolution. Moreover, these solutions are not directly linked to the physical energy grid infrastructure (e.g., to energy meters locally installed at energy consumption sites and energy production sites). As such, the existing technologies are generally unsuitable for the increasingly decentralized energy distribution infrastructure with many micro sites, and also incapable of addressing the challenges of proper identification and allocation of "green" energy.

Another important aspect to foster acceptance of, and demand for, "green" energy is trust on the side of the energy consumers. On the one hand, "green" energy is scarcer than "regular" energy produced by nuclear power plants or power plants operating on fossil fuels. On the other hand, "green" energy and "regular" energy are transported via the same grid infrastructure to the energy consumption sites. So how can a particular energy consumption site having subscribed to "green" energy from a particular renewable energy source be certain that a specific amount of "green" energy generated by that particular energy source is not sold multiple times as "green" energy to multiple energy consumption sites while, in reality, it is produced only once?

A simple approach to increasing the level of trust in renewable energy production includes full transparency of the amounts of energy produced at individual energy production sites and consumed at individual energy production sites. Full transparency necessitates an open communication (i) of locally installed smart meter readings indicative of the respectively measured energy production and energy consumption, (ii) of an energy allocation algorithm that associates energy production with energy consumption, and (iii) of energy allocations resulting from application of the energy allocation algorithm during a particular period of time.

In this regard, Vangulick et al., "Blockchain for peer-to-peer energy exchanges: design and recommendations", 2018 Power Systems Computation Conference (PSCC), Electronic ISBN: 978-1-910963-10-4, suggests a transparent, blockchain-based approach to foster trust in a decentralized energy distribution infrastructure. In a proposed transactional model, different transaction types are defined, such as "Create 15 kilowatt- hours and credit it to device A" and "Create 10 kilowatt-hours-hours and credit it to device B" (with A and B being an energy generation units), "Transfer from A to VPP" and "Transfer from B to VPP" (with VPP being a virtual power plant), and "Transfer to participants: 8 kilowatt-hours from VPP to X (signed by VPP)/17 kilowatt-hours from VPP to Y (signed by VPP)" (with X and Y being virtual generation meters).

To ensure that each participant in this transaction model is able to verify the correctness of the energy allocations performed by the VPP (here: 8 kilowatt-hours, or kWh, are allocated to X and 17 kWh are allocated to Y), each individual transaction as well as a data block comprising all the transactions are broadcast to every node within a communication network, wherein each participant in the transactions operates a dedicated such node. The underlying verification process is based on a so-called Merkle tree ("proof of membership") and permits to prove that every kWh produced is correctly assigned to a transaction and is traceable back to its very origin.

Evidently, the approach suggested by Vangulick et al. is suitable to foster trust among the participants of a decentralized energy distribution infrastructure, but it also has certain drawbacks. For instance, it requires the distribution of each transaction to each participant, which causes significant communication overhead. Moreover, communicating each transaction to each participant is undesirable in view of security considerations on the one hand and privacy concerns on the other hand.

### Summary

There is a need for a technique that enables a trustless verification of energy allocations between energy consumption sites and energy production sites, which at the same time is secure and does not give rise to privacy concerns.

According to a first aspect, an apparatus is provided for generating a dataset that enables trustless verification of energy allocations between energy consumption sites and energy production sites. The apparatus is configured to obtain energy allocations relating to a predetermined period of time, wherein an individual energy allocation allocates a specific amount of energy (i) to energy consumption at an individual energy consumption site during the predetermined period of time and (ii) to energy production at an individual energy production site during the predetermined period of time. The apparatus is further configured to calculate, in an isolated execution environment, IEE, leaves of a Merkle tree from the obtained energy allocations, to calculate a Merkle root from the leaves of the Merkle tree, and to generate a data set including the Merkle root. Moreover, the apparatus is configured to output the data set.

In the following, the apparatus of this first aspect will also be denoted IEE apparatus. The IEE apparatus may be configured to obtain the energy allocations from an energy allocation apparatus that is configured to derive the energy allocations. The IEE apparatus may be co-located with the energy allocation apparatus in an allocator domain. The allocator domain may comprise computing and communication infrastructure within the trust boundary of a service provider in charge of performing the energy allocations.

The predetermined period of time may have a particular duration that can be fixed or variable. As an example, the predetermined period of time may have a duration of less than 60 minutes and in particular of less than 30 minutes. The predetermined amount of time may, for example, have a duration of approximately 15 minutes (e.g., ± 5 minutes). The predetermined amount of time may exceed one minute.

The predetermined period of time may have a temporally absolute position and extension on a timeline. The temporally absolute position and extension may be defined by an absolute start point (e.g., 10:00 am) and an absolute end point (e.g., 10:15 am), or by an absolute start point (e.g., 10:00 am) and a duration (e.g., 15 minutes). One or both of the start point and end point may be defined by a timestamp. The timestamp may comprise a clock reading (e.g., 10:00 am) and, optionally, a date (e.g., 13 April 2018).

The energy allocations may be obtained in the form of data sets. A particular energy allocation data set may associate a particular amount of energy (indicated, e.g., in kWh) with an identifier of a single energy consumption site having consumed (at least) this amount of energy during the predetermined period of time and an identifier of a single energy production site having produced (at least) this amount of energy during the predetermined period of time. The identifiers may in particular be assigned to energy meters installed at the corresponding sites. The amount of energy in each energy allocation may not exceed the total energy consumption at the associated energy consumption site during the predetermined period of time and the total energy production at the associated energy production site during the predetermined period of time. Each energy allocation may associate exactly one energy consumption value (indicative of the full or partial energy consumption at one energy consumption site during the predetermined period of time) and exactly one energy production value (indicative of the full or partial energy production at one energy production site during the predetermined period of time).

In some variants, each energy allocation data set additionally includes a timestamp or other temporally unique reference point that permits a determination of a temporally absolute position of the predetermined period of time. As an example, the temporally unique reference point in the data set may define the absolute start point or the absolute end point of the predetermined period of time. The temporally unique reference point may be defined by timestamp.

The IEE may be realized in various ways. In some implementations, the IEE defines a contained environment in which particular program code can be executed in isolation (e.g., independently from other program code running on the same processing hardware). One or both of execution of the particular program code and a result obtained by the executed program code may trustlessly be verifiable by third parties, including operators of the energy consumption sites. To this end, the IEE may belong to a larger IEE domain that includes a plurality of IEEs and at least one attestation service configured to provide attestation to third parties. The attestation may comprise one or both of a particular program code having been executed by a particular IEE and execution of the particular program code having yielded a particular validation result (e.g., as a basis for trustless verification of that result).

The contained environment defined by the IEE can be realized using software (including virtualized hardware) or hardware, or using a combination thereof. The IEE may run in parallel to a regular operating system on the IEE apparatus. The IEE may comprise an isolated region in tamper-protected system memory.

The IEE apparatus may be configured to obtain information pertaining to a total energy consumption, during the predetermined period of time, at one or more energy consumption sites involved in the energy allocations. The IEE apparatus may be configured to obtain information pertaining to a total energy production, during the predetermined period of time, at one or more energy production sites involved in the energy allocations. In such a case, the IEE apparatus may be configured to validate, in the IEE, the obtained energy allocations based on the obtained information pertaining to the total energy consumption and the total energy production so as to generate a validation result. The data set output by IEE apparatus may also comprise the validation result. The validation result may be expressed by a binary parameter (e.g., "yes" / "no" or "true" / "false").

The validation result obtained in the IEE may depend on a determination as to whether or not at least one of an aggregated energy consumption per energy consumption site over the energy allocations and an aggregated energy production per energy production site over the energy allocations matches the total energy consumption at the respective energy consumption site and the total energy production at the respective energy production site, respectively. For example, the validation result may depend on whether or not, for a particular energy consumption site, the aggregated energy amounts across the energy allocations in which the particular energy consumption site is involved substantially equal, or match, the total energy consumption at that particular energy consumption site. In a similar manner, the validation result may depend on whether or not, for a particular energy production site, the aggregated energy amounts across the energy allocations in which the particular energy production site is involved substantially equal, or match, the total energy production at that particular energy production site. The validation result may be positive ("yes") if there is a match for each energy consumption site and each energy production site involved in the energy allocations obtained for the predetermined period of time. Otherwise, meaning that if there is any mismatch, the validation result may be negative ("no").

Additionally, or in the alternative, the validation result obtained in the IEE may depend on a determination as to whether or not the obtained energy allocations conform to one or more predefined allocation rules by applying the one or more allocation rules to the total energy consumption(s) and the total energy production(s) to re-calculate the energy allocations and then comparing the re-calculated energy allocations with the obtained energy allocations. The validation result may be positive ("yes") if there is a full match between the re-calculated energy allocations and the obtained energy allocations. Otherwise, meaning that if there is any mismatch, the validation result may be negative ("no").

The one or more energy allocation rules may have been generated based on an energy mix indicated on behalf of, or for, a particular energy consumption site. Such an energy mix indication may specifically refer to one or more individual energy production sites. For a particular energy consumption site it may be indicated in the energy mix indication that a certain percentage of its energy consumption shall be (e.g., wind) energy from a first energy production site and a further percentage shall be (e.g., photovoltaic) energy from a second energy production site. Indicating a particular production site for a particular energy mix will, for example, help to ensure that such production sites that are close by to the energy consumption site can be preferred, leading to lower losses over the grid infrastructure.

The information pertaining to the total energy consumption and to the total energy production may be obtained in the form of measurements locally performed at the one or more energy consumption sites and at the one or more energy production sites involved in the energy allocations, respectively. The measurements may be performed once per predetermined period of time (e.g., at an end point of the predetermined period of time), or the measurements may be aggregated over the predetermined period of time.

The measurements may be performed by energy meters capable of communicating the measurements, via a wireless or wired connection (e.g., to the allocator domain comprising the IEE apparatus). Such energy meters may be configured as so-called "smart meters" or as conventional energy meters with communication capability. The measurements may be communicated together with a timestamp or other temporally unique reference point that permits a determination of a temporally absolute position of the predetermined period of time. The measurements may be used by the energy allocation apparatus for calculating a set of energy allocations per predetermined period of time.

In some implementations, each measurement has been signed with a private key prior to being received at the IEE apparatus. The IEE apparatus may be configured to validate each signed measurement using an associated public key. The private/public key pair may be associated with a particular energy meter performing the measurement, with an operator of a set of energy meters, or with an operator of a grid infrastructure to which the energy meter is connected. As an example, the measurements may have locally been signed at the one or more energy consumption sites and the one or more energy production sites involved in the energy allocations (e.g., when the private/public key pairs are associated with individual energy meters). Alternatively, the trust horizon may be further up in the chain of trust (e.g., when the private/public key pairs are associated with grid operators). The allocator domain may be an endpoint of the chain of trust opposite to domains of the energy consumption sites and energy production sites.

The energy production sites and energy consumption sites may collectively define an energy production domain and energy consumption domain, respectively. Each individual site may be regarded as a dedicated sub-domain. Each site (or sub-domain) may comprise computing and communication infrastructure that define a trust boundary of the respective site.

The leaves of the Merkle tree may be calculated by hashing a particular data item. As an example, such a data item may be constituted by, or may be derived from, an individual energy allocation (e.g., in the form of a character string) as obtained by the IEE apparatus. The leaves of the Merkle tree may comprise the entirety of energy allocations calculated during the predetermined period of time by the energy allocation apparatus for a given set of energy consumption sites and a given set of energy production sites. As such, also the Merkle root may be indicative of the entirety of these energy allocations.

The Merkle tree may comprise intermediate nodes between the Merkle root and the leaves of the Merkle tree. In some variants, the IEE is configured to output information pertaining to the intermediate nodes. Additionally, or in the alternative, the intermediate nodes may also be calculated by the energy allocation apparatus. In such a case, the energy allocation apparatus may output information pertaining to the intermediate nodes. The information pertaining to the intermediate nodes may be output to towards one or both of the domains of the energy consumption sites and energy production sites domains for trustless verification by the respective operator.

The data set output by the IEE apparatus may be stored in at least one data storage selected from a distributed ledger and a blockchain. In some variants, the distributed ledger may take the form of a blockchain. In the blockchain or other data storage, at least one identifier may be assigned to the data set (or a data block comprising the data set) so that the dataset can be retrieved from the blockchain or other data storage at a later point in time using the at least one identifier. The at least one identifier may uniquely be associated with a particular data set, a particular data block, or a particular data set source (e.g., a particular allocator domain or a particular IEE apparatus). The at least one identifier may be returned to the allocator domain (e.g., the IEE apparatus) that generated the data set. The IEE apparatus may be configured to upload the data set, via a communication network, to the data storage.

In some variants, the IEE comprises a trusted execution environment, TEE. The TEE may comprise a hardware-protected enclave. This enclave may be configured to communicate via a dedicated interface with one or more applications or an operating system (OS) running outside the enclave. The TEE may be associated with an attestation service configured to attest one or both of specific (e.g., trusted) program code being executed in the correspondingly programmed enclave and the enclave being located within a hardware environment.

The apparatus may be configured to sign the data set, or a portion thereof, before it is output. The signature may be calculated at least over the Merkle root in the data set. The signature may additionally be calculated over the optional validation result if same is included in the data set. The data set may be signed with a signature key uniquely associated with the IEE. The signature key may be a private key that belongs to a private/public key pair. The signature key may be generated by, or within, the IEE (e.g., in case of a TEE upon production of the TEE). The signature key may change upon a change of program code running in the IEE.

Also provided is a system comprising an energy allocation apparatus for calculating energy allocations, wherein an energy allocation allocates a specific amount of energy (i) to energy consumption at an individual energy consumption site during a predetermined period of time and (ii) to energy production at an individual energy production site during the predetermined period of time. The system further comprises the IEE apparatus that is configured to obtain the calculated energy allocations.

The system may be located in the allocator domain. The system may interface the energy consumption site and energy production site domains or any domain located between the energy consume and energy production site domains and the allocator domain.

According to a further aspect, an apparatus for trustless verification of energy allocations between energy consumption sites and energy production sites is provided, wherein an energy allocation allocates a specific amount of energy (i) to energy consumption at an individual energy consumption site during a predetermined period of time and (ii) to energy production at an individual energy production site during the predetermined period of time. The apparatus is associated with a particular energy consumption site or energy production site and configured to obtain a data set comprising a first Merkle root of a first Merkle tree, wherein the first Merkle root has been calculated from the energy allocations. Still further, the apparatus is configured to obtain at least one first energy allocation for the particular energy consumption site or energy production site and to obtain one or more Merkle tree elements selected from (i) one or more leaves derived from one or more second energy allocations different from the at least one first energy allocation for the particular energy consumption site or energy production site and (ii) one or more intermediate nodes derived at least from one or more leaves associated with the one or more second energy allocations. The apparatus is also configured to calculate a second Merkle root of a second Merkle tree comprising (i) at least one leave derived from the obtained at least one first energy allocation and (ii) the obtained one or more Merkle tree elements, and to verify the energy allocations underlying the first Merkle root by comparing the first Merkle root with the second Merkle root.

The trustless verification apparatus may be realized as a portable computer (e.g., a laptop computer, tablet computer or a smartphone) or as a stationary computer (e.g., as a personal computer). The trustless verification apparatus may be located or operated within the boundary of trust of a particular energy consumption site or energy production site. As said, this boundary of trust may be defined by computing and communication infrastructure that may thus also include the trustless verification apparatus.

The trustless verification apparatus may be configured to verify at least one of program code executed in the IEE and hardware that executed the IEE. This verification can be based on information generated by an attestation service associated with the IEE. The information may at least partially be obtained by the trustless verification apparatus from one or both of the allocator domain and the attestation service. For example, a network node of the allocator domain may have obtained an attestation verification report (that may be linked to at least one of program code executed in the IEE and hardware that executed the IEE based) from the attestation service. The trustless verification apparatus may then obtain the attestation verification report from the allocator domain. The attestation verification report may have been signed by a private key of the attestation service so that the trustless verification apparatus can verify authenticity of that report using the corresponding public key. The trustless verification apparatus may further be configured to check that the attestation verification report thus obtained is indeed linked to the at least one of program code executed in the IEE and hardware that executed the IEE by obtaining corresponding information that has been generated by the IEE directly. Such information may be output by the IEE in an attestation quote.

The trustless verification apparatus may be configured to obtain the data set with the first Merkle root of the first Merkle tree from at least one data storage selected from a distributed ledger and a blockchain. The data set may be received in response to a dedicated request sent to the data storage by the trustless verification apparatus. The request may comprise at least one unique identifier. For example, each source of data sets (e.g., each IEE apparatus or each allocator domain) may have a unique identifier that will be associated with data sets from this data set source that are stored in the data storage. Accordingly, the trustless verification apparatus may use this unique identifier to retrieve a data set of interest, or a data block containing the date set of interest, from the data storage. The trustless verification apparatus may optionally use further information to identify the data set of interest (e.g., in a particular data block), such as a timestamp or other temporal information associated with a particular data set of interest.

The one or more Merkle tree elements may in particular constitute intermediate nodes of a Merkle tree (i.e., neither leaves nor the root). The trustless verification apparatus may be configured to obtain the one or more Merkle tree elements from the energy allocation apparatus, the IEE apparatus or any other server in the allocator domain. The one or more Merkle tree elements may have been generated by the IEE or by the energy allocation apparatus.

The data set comprising the Merkle root may have been calculated in an isolated execution environment, IEE, from the energy allocations. At least a portion of the data set, such as the Merkle root, may have been signed by the IEE. The trustless verification apparatus may further by configured to verify, or trigger verification of, the signature of the data set. The verification may include verifying (e.g., integrity of) a signature key applied by the IEE, for example verifying that the signature key can be certified within a producer domain of the IEE.

Also provided is a method for generating a data set that enables trustless verification of energy allocations between energy consumption sites and energy production sites. The method comprises obtaining energy allocations relating to a predetermined period of time, wherein an individual energy allocation allocates a specific amount of energy (i) to energy consumption at an individual energy consumption site during the predetermined period of time and (ii) to energy production at an individual energy production site during the predetermined period of time. The method further comprises calculating, in an isolated execution environment, IEE, leaves of a Merkle tree from the obtained energy allocations, and calculating a Merkle root from the leaves of the Merkle tree. Further, the method comprises generating a data set including the Merkle root, and outputting the data set.

In some variants, the method steps are performed within the IEE. As such, the data set may be output by the IEE. The method may be performed by the IEE apparatus presented herein.

Moreover, a method is provided for trustless verification of energy allocations between energy consumption sites and energy production sites, wherein an energy allocation allocates a specific amount of energy (i) to energy consumption at an individual energy consumption site during a predetermined period of time and (ii) to energy production at an individual energy production site during the predetermined period of time. The method is performed for a particular energy consumption site or energy production site and comprises obtaining a data set comprising a first Merkle root of a first Merkle tree, wherein the first Merkle root has been calculated from the energy allocations. Further, the method comprises obtaining at least one first energy allocation for the particular energy consumption site or energy production site, and obtaining one or more Merkle tree elements selected from (i) one or more leaves derived from one or more second energy allocations different from the at least one first energy allocation for the particular energy consumption site or energy production site and (ii) one or more intermediate nodes derived at least from one or more leaves associated with the one or more second energy allocations. Further still, the method comprises calculating a second Merkle root of a second Merkle tree comprising (i) at least one leave derived from the obtained at least one first energy allocation and (ii) the obtained one or more Merkle tree elements, and verifying the energy allocations underlying the first Merkle root by comparing the first Merkle root with the second Merkle root.

The trustless verification method may be performed by the trustless verification apparatus presented herein.

A further aspect of the present disclosure relates to computer program product comprising program code portions for performing the steps of any of the method aspects taught herein when executed on one or more processors. The computer program product may be stored on a processor-readable recording medium such as a semiconductor memory, a hard disk or a portable data carrier such as a Universal Serial Bus, USB, stick. The computer program product may also be provided for download via a communication network, such as the Internet. The computer program product may be stored in a protected environment of the IEE.

### Brief Description of the Drawings

Further aspects, details and advantages of the present disclosure will become apparent from the detailed description of exemplary embodiments below and from the drawings, wherein:
- Fig. 1: is a diagram illustrating a system embodiment of the present disclosure;
- Fig. 2: is a block diagram illustrating an embodiment of an IEE apparatus in accordance with the present disclosure;
- Fig. 3: is a block diagram illustrating an embodiment of a trustless verification apparatus in accordance with the present disclosure;
- Fig. 4: is a signalling diagram illustrating operations in and communications between energy production site/consumption site domains and an allocator domain;
- Fig. 5: illustrates a data set indicative of total energy production and total energy consumption at individual energy production sites and energy consumption sites, respectively, during a predetermined period of time;
- Fig. 6: illustrates three data sets indicative of energy allocations between the energy production sites and the energy consumption sites;
- Fig. 7: is a signalling diagram illustrating operations of and communications between system entities;
- Fig. 8: is a flow diagram illustrating a first method embodiment of the present disclosure from the perspective of the IEE apparatus;
- Fig. 9: is a schematic diagram of a Merkle tree as calculated by the IEE apparatus;
- Fig. 10: is a table illustrating a validation procedure for the energy allocations of Fig. 6 as performed by the IEE apparatus;
- Fig. 11: is a flow diagram illustrating a second method embodiment of the present disclosure from the perspective of the trustless verification apparatus;
- Fig. 12: is a signalling diagram illustrating operations in and communications between a verificator domain of an energy consumption site or energy production site, a blockchain and an attestation service; and
- Fig. 13: is a schematic diagram illustrating a verification procedure for energy allocations as performed by the trustless verification apparatus.

### Detailed Description

In the following description, for purposes of explanation and not limitation, specific details are set forth in order to provide a thorough understanding of the present disclosure. It will be apparent to one skilled in the art that the present disclosure may be practiced in other embodiments that depart from these specific details.

Those skilled in the art will further appreciate that the steps, services and functions explained herein may be implemented using individual hardware circuits, using software in conjunction with a programmed microprocessor or general purpose computer, using one or more application specific integrated circuits (ASICs), using an isolated execution environment (IEE) and/or using one or more digital signal processors (DSP).

It will also be appreciated that when the present disclosure is described in terms of a method, it may also be embodied in one or more processors and one or more memories coupled to the one or more processors, wherein the one or more memories store one or more computer programs that perform the steps, services and functions disclosed herein when executed by one or more processors.

In the following description of exemplary embodiments, the same reference numerals denote the same or similar components.

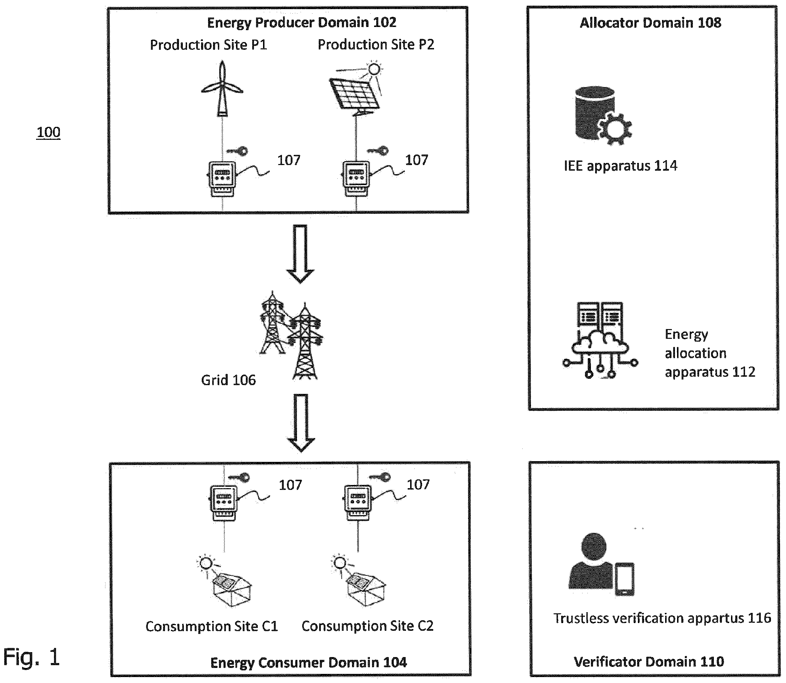

Fig. 1 illustrates an embodiment of an energy delivery, allocation and verification system 100 in which aspects of the present disclosure can be implemented. As shown in Fig. 1, the system 100 comprises different, typically locally separated domains, including an energy production domain 102 and an energy consumption domain 104 interconnected via electricity grid infrastructure, or simply grid, 106. The grid 106 is operated by one or more grid operators and can be considered a further domain.

In Fig. 1, the energy production domain 102 exemplarily comprises two energy production sites P1 and P2 that provide "green" electric energy in the form of wind energy and photovoltaic energy, respectively. In a similar manner, the energy consumption domain 104 comprises two energy consumption sites C1 and C2 that consume the energy produced in the energy production domain 102. As illustrated in Fig. 1 by photovoltaic cells installed on rooftops, each energy consumption site C1, C2 can at the same time act as an energy production site and thus belong to both domains 102, 104.

An energy meter 107 is provided at the premises of each energy production site P1, P2 and each energy consumption site C1, C2 for measuring the respectively produced and consumed energy. The energy meters 107 are smart devices capable of reporting the measurements via a communication network (not illustrated in Fig. 1) to other domains within the system 100. Moreover, as illustrated by key symbols in Fig. 1, each energy meter 107 is capable of signing its measurements with a dedicated signature key associated with the respective energy production site P1, P2 or energy consumption site C1, C2. In some variants, each energy meter 107 is also configured to encrypt the respective measurements using a dedicated encryption key associated with the respective energy production site P1, P2 or energy consumption site C1, C2. The signature keys applied at the energy production sites P1, P2 and energy consumption sites C1, C2 are private keys. Complementary public keys may be distributed by the sites C1, C2, P1, P2 themselves or via a public key infrastructure (not illustrated in Fig. 1).

In addition to the energy production domain 102 and the energy consumption domain 104, the system 100 comprises an energy allocation domain 108 (or simply allocator domain) and a verificator domain 110. The allocator domain 108 is coupled to the energy production site domain 102 and the energy consumption site domain 104 via a communication network (such as the Internet) and configured to receive the signed and, optionally, encrypted measurements from the energy meters 107. At the same time, the allocator domain 108 can access the public key infrastructure via the communication network so as to obtain the public keys associated with the energy production sites P1, P2 and energy consumption sites C1, C2.

In some variants, the signing and, optionally, encrypting processes are not performed locally by the energy meters 107, but at a higher level domain, for example a grid infrastructure operator domain or a domain of an operator of an energy meter infrastructure. These domains are logically located between the energy production domain 102 and the energy consumption domain 104 on the one hand and the applicator domain 108 on the other hand and comprise computing and communication infrastructure within the trust boundary of the operator. In such scenarios, the keys will be associated with the grid infrastructure operator(s) or the energy meter infrastructure operator(s).

As shown in Fig. 1, the allocator domain 108 comprises an energy allocation apparatus 112, also called allocator 112, as well as an IEE apparatus 114. In some variants, the allocator 112 and IEE apparatus 114 are located in different sub-domains of the allocator domain 108 that define separate boundaries of trust.

The allocator 112 is configured to apply allocation rules (that collectively may define an allocation algorithm) so as to calculate energy allocations between the energy production sites P1, P2 and the energy consumption sites C1, C2 based on the measurements reported by the energy meters 107. Such a reporting may be performed in a distributed manner via direct communication connections between the allocator domain 108 and the energy meters 107 or in a bundled manner, in which an energy meter infrastructure operator collects the measurements from the energy meters 107 and collectively reports them to the allocator domain 108 (e.g., once per predetermined period of time).

The IEE apparatus 114 is configured to communicate with the energy allocation apparatus 112. The IEE apparatus 114 can physically be co-located with the energy allocation apparatus 112. In some variants, the energy allocation apparatus 112 can be realized using one or more server computers or using cloud processing resources.

In the present embodiment, the IEE apparatus 114 comprises an IEE that is configured as a TEE. The TEE hosts trusted services implemented via trusted program code running in a hardware-protected enclave of the TEE. There may exist a TEE client interface on top of the OS. Via that TEE client interface, the OS or an application running on the OS is capable of communicating with the TEE enclave. Via these interfaces, the TEE provides its services to the OS or an application running on the OS. The TEE has a dedicated signature key (e.g., a first private key of a public/private key pair) for signature purposes. Optionally, the TEE also has a dedicated encryption key (e.g., a second private key of a public/private key pair) for encryption purposes.

Still referring to Fig. 1, the verificator domain 110 comprises a trustless verification apparatus 116, sometimes also denoted verificator 116. The trustless verification apparatus 116 is associated with a particular operator, which can be an operator of any of the energy production sites P1, P2 and the energy consumption sites C1, C2. As such, the verificator domain 110 can be an operator-specific domain typically defined by a privacy- (or trust-) related boundary and, as a rule, comprising only a single site operator or a limited set of site operators willing to share their energy consumption and/or production data.

The trustless verification apparatus 116 is configured to verify the energy allocations performed by the energy allocator apparatus 112. In this manner, the particular site operator (or other user) associated with the trustless verification apparatus 116 and using same, such as for energy consumption site C1, can check that the energy allocations calculated by the energy allocator apparatus 112 for the associated energy consumptions are correct (e.g., that a certain amount of energy produced at any of the energy productions sites P1, P2 is not allocated more than once). Optionally, it can also be checked that the energy allocations conform, for example, to previously agreed allocation rules in terms of a particular energy mix. Evidently, there is a requirement that this check, or verification, can be done for energy consumption site C1 in a secure and privatized way, without having to disclose, for example, the energy allocations involving energy consumption site C2 or without involving any of the energy production sites P1 and P2 not having delivered energy as requested for energy consumption site C1.

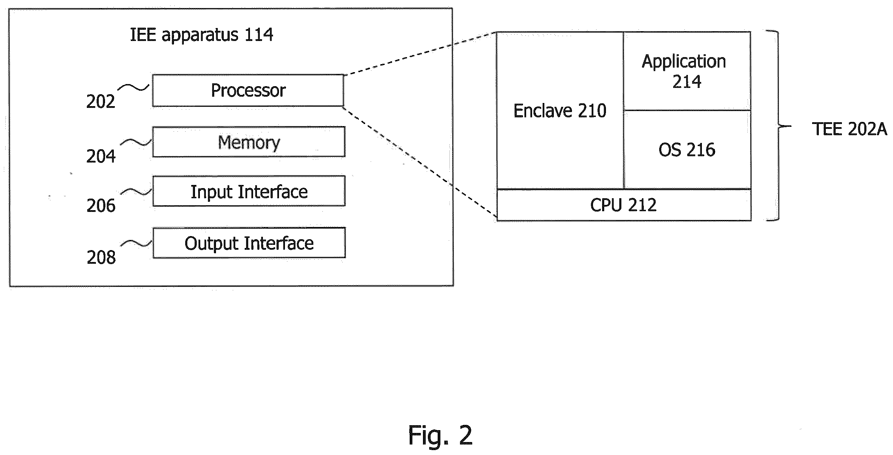

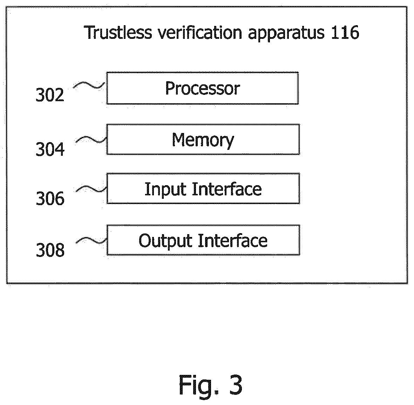

In the following, embodiments of the IEE apparatus 114 and the trustless verification apparatus 116 of Fig. 1 will be described with reference to Figs. 2 and 3, respectively.

Fig. 2 illustrates an embodiment of the IEE apparatus 114 of Fig. 1. In the embodiment illustrated in Fig. 2, the IEE apparatus 114 comprises a processor 202 and a memory 204 coupled to the processor 202. The IEE apparatus 114 further comprises an input interface 206 and an output interface 208. The memory 204 stores program code that controls operation of the processor 202.

As understood herein, a processor, such as the processor 202, may be implemented using any processing circuitry and is not limited to, for example, a single processing core but may also have a distributed topology. As such, the IEE apparatus could also be realized in a cloud implementation.

In the present embodiment, the processor 202 is configured to comprise a TEE 202A, such as, for example, an Intel® SGX TEE. As illustrated in Fig. 2, the TEE 202A comprises at least one hardware-protected enclave 210 configured to run program code within or on top of a central processing unit (CPU) 212. In parallel to the enclave 210, an OS 214 is running on the CPU 212, and one or more applications 216 are installed on top of the OS 214. The applications 216, and the OS 214, are capable of communicating with the enclave 210 using a dedicated interface on both sides.

The enclave 210 of TEE 202A is in one variant configured to generate a private/public signature key pair (e.g., upon its initial start when generating the enclave or during a later key generation procedure) associated with the enclave 210 and with the particular program code executable in the enclave 210. The enclave 210 may be configured such that this private/public signature key pair becomes outdated, invalid or unusable when the program code in the enclave 210 is tampered with (e.g., modified).

The enclave 210 with its dedicated program code is in some implementation configured to yield a specific output (also called "quote" or "attestation quote") for verification purposes. The quote output by the TEE 202A may be stored externally from the TEE 202A for later attestation purposes. As an example, the quote may be stored within the allocator domain 108 for later retrieval (e.g., by the trustless verification apparatus 116 of Fig. 1).

An attestation service associated with the TEE 202A (or an IEE in general) may be configured to enable verification of the quote by third parties (e.g., that the quote was actually generated by certain program code in the enclave 210 and, optionally, that the TEE 202A that generated the quote is indeed associated with that attestation service). The verification as such may be triggered or performed by other devices, such as the trustless verification apparatus 116 of Fig. 1 or a network node in the allocator domain 108.

There exist various possibilities for generating the quote by the TEE 202A. In one variant, the TEE 202A is configured to generate an enclave identifier as a hash over certain information characteristic of the enclave 210. Such information includes one or more of program code executable within the enclave 210 (e.g., in a binary representation) and data stored within the enclave 210. Such information may further include a hardware fingerprint of the TEE 202A with the enclave 210 (e.g., information characteristic of the underlying processing circuitry). Additionally, or in the alternative, the quote includes a public key of the TEE 202A (such as the public signature key generated upon initial start, as explained above). The quote may then be generated from the enclave identifier (and, optionally, the public key of the TEE 202A) by signing same, or a cryptographic token derived therefrom, with a dedicated attestation key of the TEE 202A (such as the private signature key generated upon initial start, as mentioned above). In some variants, the quote is additionally encrypted, or signed, with a key of the attestation service. The quote may then be used by a third party to verify that a certain program code was executed in a certain TEE 202A (or a specific IEE in general) and, in some variants, to additionally verify what the result of this execution was.

Fig. 3 illustrates an embodiment of the trustless verification apparatus 116. In the embodiment illustrated in Fig. 3, the trustless verification apparatus 116 comprises a processor 302 and a memory 304 coupled to the processor 302. The trustless verification apparatus 116 further comprises an input interface 306 and an output interface 308. The memory 304 stores program code that controls operation of the processor 302.

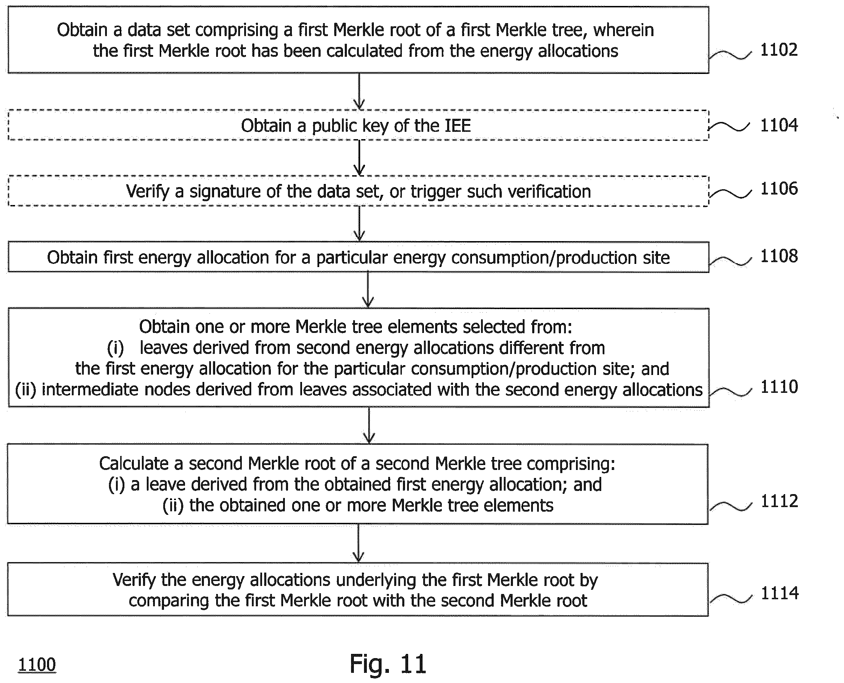

In some variants, the trustless verification apparatus 116 is realized as a tablet computer or smartphone. The trustless verification apparatus 116 is configured to execute an "app" stored as program code in memory 304 to control processor 302 to perform the steps that will be discussed with reference to Fig. 11 below.

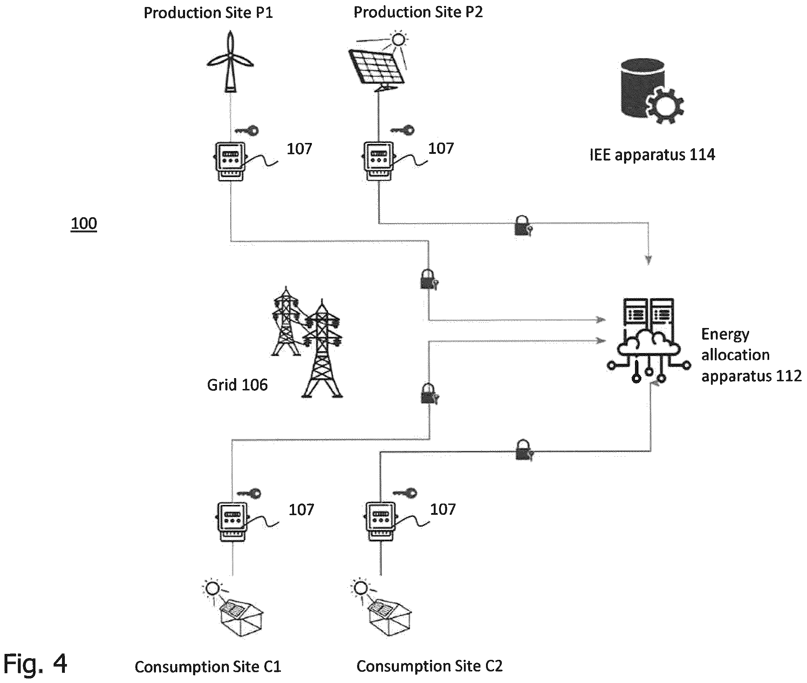

Fig. 4 illustrates in a signaling diagram certain initial operations that enable a later calculation of energy allocations by the energy allocation apparatus 112.

As shown in Fig. 4, each energy meter 107 reports its energy measurements to the energy allocation apparatus 112 via a communication network (not illustrated in Fig. 4). These measurements have locally been performed over a specific period of time at each energy production site P1, P2 and energy consumption site C1, C2. A time synchronization procedure may regularly be performed among the energy meters 107 to make sure that the measurements will be reported for synchronized periods of time.

Each measurement is reported the form of a measurement data set comprising at least an energy amount (e.g., 2 kWh) and a timestamp associated with the measured energy amount (e.g., on 13 April 2019 at 10:15 am). The timestamp may be indicative of the start or end of the period of time over which the measurement has been taken. Optionally, the measurement data set may also be indicative of a duration of that period of time. The data set may also indicate an identifier of the reporting entity (e.g., energy consumption site C1).

Each energy meter 107 measures either the total energy amount produced or consumed since the energy meter 107 started to operate or an incremental energy amount produced or consumed since the last measurement. In the first case, the incremental energy amount produced or consumed since the last measurement may be derived by subtracting the last reported measurement from the currently reported measurement. Two measurements may temporally be spaced apart by a predetermined period of time, such as 15 minutes. Alternatively, several intermediate measurements performed over the predetermined period of time may be aggregated and the aggregated measurement may be reported. Of course, such an aggregation over the predetermined period of time could also be performed within the allocator domain 108.

Each measurement data set (and, thus, each measurement) may be cryptographically signed by the associated energy meter 107. This means that a respective private signature key has been applied to the data set and that the resulting data ("the signature") has been appended to the data set, resulting in a larger data set. This resulting data set is in some implementation cryptographically encrypted by the associated energy meter 107. This means that a respective private encryption key has been applied to the resulting data set, resulting in an encrypted data set that is to be processed by the energy allocator apparatus 112.

As explained above, one or both of the signing process and the (optional) encryption process could alternatively, or additionally, be performed by devices located in the domain of a grid infrastructure operator or an energy meter infrastructure operator.

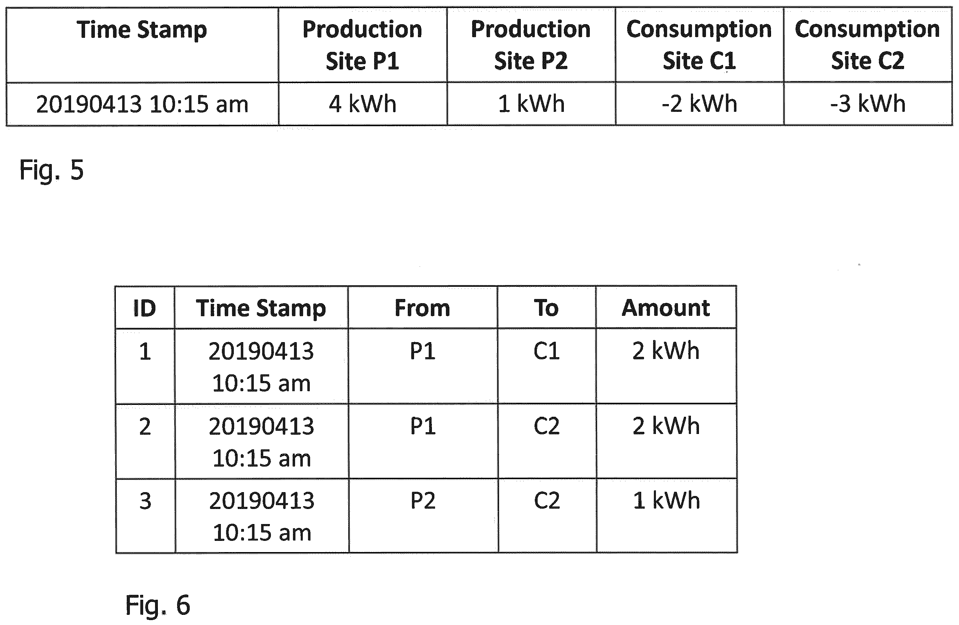

The energy allocation apparatus 112 collects the measurement data sets reported by the energy production domain 102 and the energy consumption domain 104 for a predetermined period of time (e.g., as defined by identical timestamps in the reported measurements) and formats, or aggregates, them in a further data set as illustrated in Fig. 5. Then, energy allocation rules (indicative, e.g., of pre-selected energy mixes) are applied to that further data set to calculate individual energy allocations, as exemplarily illustrated in the table of Fig. 6.

As shown in Fig. 6, each energy allocation data set resulting from application of the allocation rules to the data set of Fig. 5 comprises a data set identifier, a timestamp, an identifier of the energy production site (e.g., P1) associated with the allocation, an identifier of the energy consumption site (e.g., C1) associated with the allocation, and the allocated energy amount (e.g., 2 kWh). In the present embodiment, the timestamp marks an absolute point in time (e.g., 10:15 am on 4 April 2019) and, together with a predefined duration preceding or following the point in time (e.g., 15 minutes), defines a predetermined period of time in which the energy consumption site C1 has consumed (at least) the allocated energy amount of 2 kWh and the energy production site P1 has produced (at least) the allocated energy amount 2 kWh. It will be appreciated that any additionally consumed or produced energy amount will be reflected in the further energy allocation data sets of Fig. 6. In the data sets of Fig. 6, the identifiers of the energy production and consumption sites may be indicated by (at least locally unique) identifiers of the associated energy meters (e.g, in the form of an alphanumerical character string such as "ABC987654").

The energy allocation rules used to generate the data sets in Fig. 6 reflect energy mix preferences at the energy consumption sites C1, C2. For example, an operator of energy consumption site C1 may request that the energy needs of site C1 are fully served by wind energy from energy production site P1 closest to consumption site C1. In a similar manner, an operator of energy consumption site C2 may indicate that the energy needs of site C2 are to be satisfied by two thirds by wind energy from energy production site P1 and by one third by photovoltaic energy from energy production site P2. These requested energy mixes will then give rise to energy allocation rules that result in the three energy allocations indicated in Fig. 6.

It will be appreciated that Fig. 6 illustrates an idealization, as the energy production sites P1 and P2 may, for example, have produced more energy than consumed at energy consumption sites C1 and C2. However, such scenarios can easily be accommodated by adding suitably nullifying allocations.

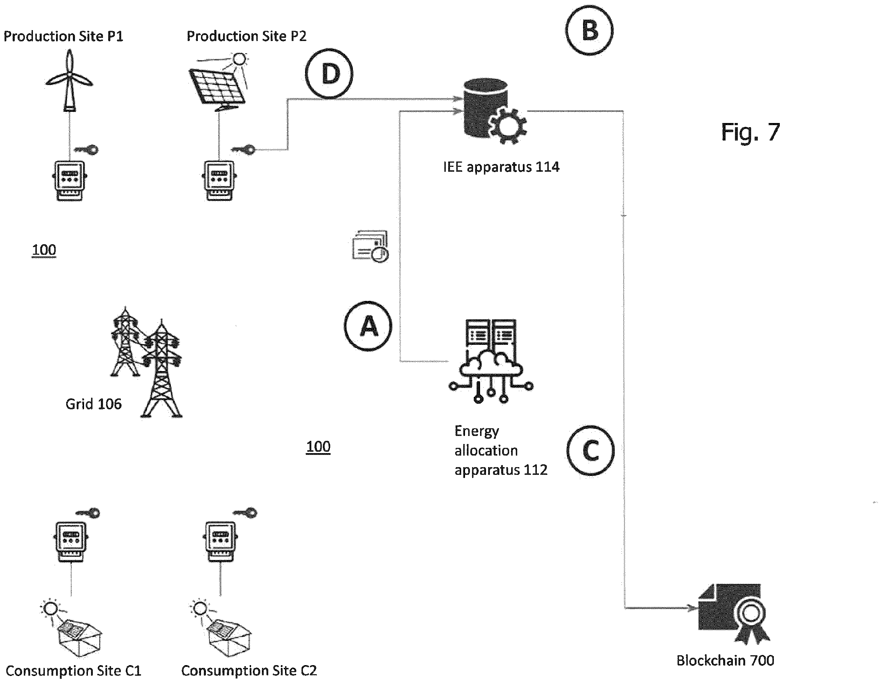

After the energy allocations have been calculated by the energy allocation apparatus 112, they are sent to the IEE apparatus 114 as indicated by signaling step A in Fig. 7. Fig. 7 is a signaling diagram that illustrates the operations of, and communications between, various entities of the network 100, including the energy allocation apparatus 112 and the IEE apparatus 114.

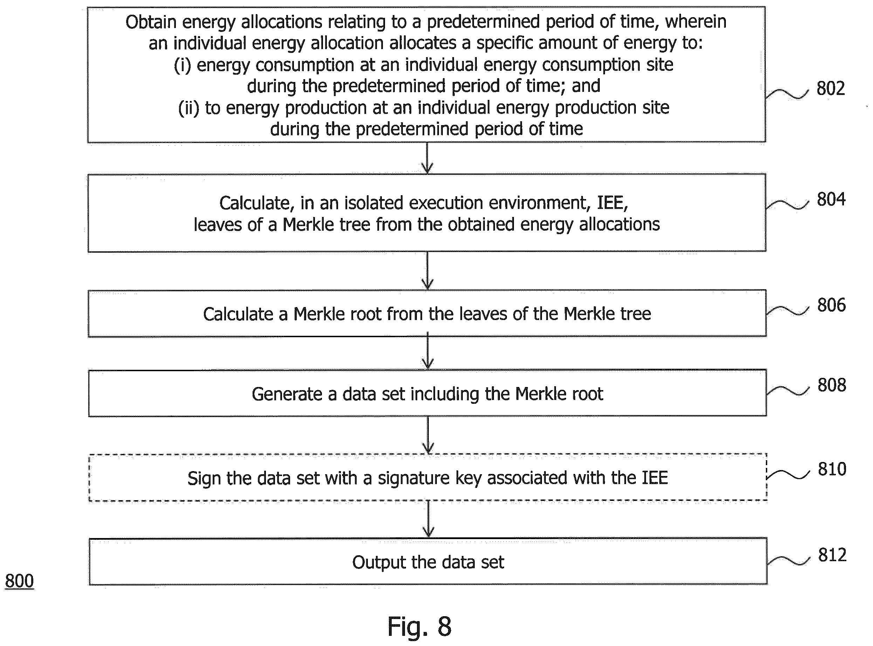

The operations of the IEE apparatus 114 will now be described in greater detail with reference to the flow diagram 800 of Fig. 8 and with continuing reference to Fig. 7. In the present embodiment, all operations illustrated in Fig. 8 are performed within the TEE 202A, which ensures that the resulting output of the IEE apparatus 114 can be considered trusted.

The operations of the IEE apparatus 114 start in step 802 with obtaining, from the energy allocation apparatus 112, the calculated energy allocations (see also Fig. 6 and step A in Fig. 7). The energy allocations are obtained within the TEE 202A of the IEE apparatus 114, for example via a designated interface from a "rich" OS running on the IEE apparatus 114. This "rich" OS, in turn, received the energy allocations from the energy allocation apparatus 112 via a direct or indirect communication link.

As explained above and illustrated in Fig. 6, each energy allocation relates to a predetermined period of time (as indicated by the timestamp, such as the string "20190413 10:15 am", plus or minus a predefined period of time, such as 15 minutes). Moreover, each energy allocation allocates a specific amount of energy (i) to energy consumption at an individual energy consumption site during the predetermined period of time and (ii) to energy production at an individual energy production site during the predetermined period of time. As an example, the energy allocation in Fig. 6 with ID 1 indicates that an energy amount of 2 kWh produced at energy production site P1 was allocated to energy consumption site C1 for consumption.

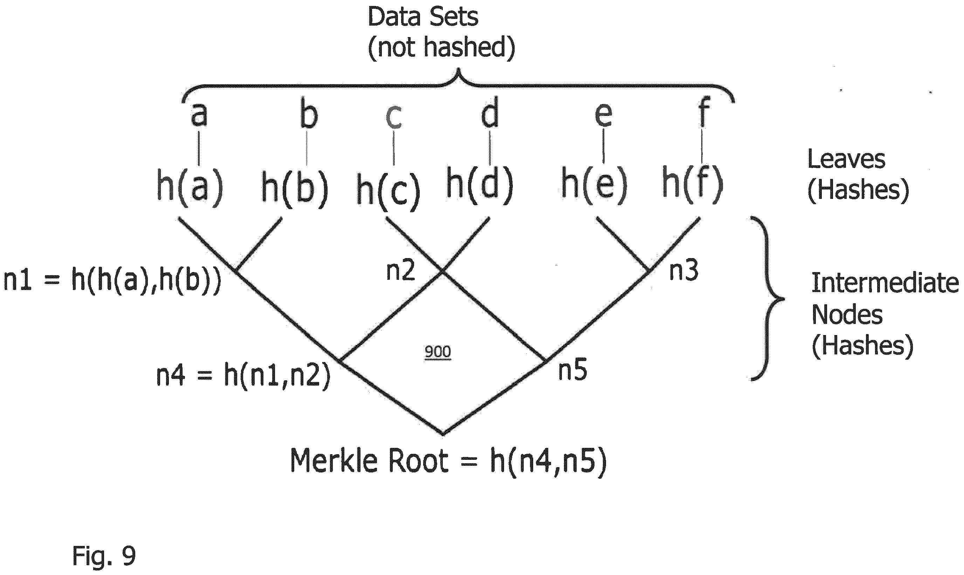

The operations of the IEE apparatus 114 further comprise calculating, in step 804 and by the TEE 202A, leaves of a Merkle tree from the obtained energy allocations and calculating, in step 806 and by the TEE 202A, a Merkle root from the leaves of the Merkle tree. These calculation steps 804 and 806 are denoted by step B in Fig. 7 and schematically illustrated in Fig. 9.

Fig. 9 shows a Merkle tree 900 having leaves, a root and intermediate nodes between the leaves and the root. It will be appreciated that calculating the Merkle root in step 806 from the leaves calculated in step 804 requires calculation of the entire Merkle tree 900 within the TEE 202A. To calculate that Merkle tree 900, the data set of each energy allocation (as indicated by an individual table line in Fig. 6, optionally without the data set identifier, and as schematically represented by letters a to f in Fig. 9) is input as a string to a hashing function, such as a SHA-2 function.

The resulting hash values (indicated by h(a) to h(f) in Fig. 9, wherein h denotes the hashing function) constitute the leaves of the Merkle tree 900. Then, iteratively further hash values (n1, n2, n3 as well as n4 and n5) are calculated from pairs of hash values of a lower layer starting from the leaves. As an example, the hash value n1, which constitutes an intermediate node in the Merkle tree 900, is obtained by hashing the pair (e.g., a concatenation) of h(a) and h(b). The Merkle root is calculated as the hash value of the pair of hash values on the penultimate layer. The Merkle root is indicated as h((n4, n5) in Fig. 9.

The operations of the IEE apparatus 114 comprise generating a data set including the Merkle root (step 808). Typically, one such data set will be generated per predetermined period of time (e.g., every 15 minutes) and covers all amounts of energy produced and consumed during that period of time (as exemplarily illustrated in Fig. 5).

The data set generated in step 808, or a portion thereof, may optionally be signed (step 810), for example with the private signature key of the enclave 210. The trustless verification apparatus 116 may then verify the signature using the public signature key of the enclave 210. This public signature key may be obtained by the trustless verification apparatus 116 from the attestation quote (as stored, for example, in the allocator domain 108) or otherwise.

The data set will then be output by the TEE 202A (step 812). Typically, one signed data set is output by the TEE 202A per predetermined period of time for the energy allocations that have been generated for the corresponding period of time.

The data set output by the TEE 202A is in a further step output by the IEE apparatus 114. A copy of the data set may be stored locally at the IEE apparatus 114 for later retrieval (e.g., by the trustless verification apparatus 116). In some variants, the IEE apparatus 114 outputs the data set, for example via a communications network such as the Internet, to an external data storage outside the allocator domain 108. Additionally, or in the alternative, the data set may output to be stored at another network node of the allocator domain 108.

In the present embodiment, the data set output by the IEE apparatus 114 is stored in a distributed manner, for example in a blockchain 700, see signaling step C in Fig. 7. The blockchain 700 may at least in part be located outside the allocator domain 108. In the blockchain 700, one or more such data sets that pertain to the same period of time are stored in a dedicated data block. Data sets pertaining to different periods of time may, in some variants, be stored in different data blocks. The data blocks will be linked in accordance with the blockchain paradigm.

In the blockchain 700, data sets generated in different allocator domains 108 may be stored. Each data set may be stored together with an identifier associated with the particular allocation domain 108 that created the data set. As an example, this identifier may already be included in the data set upon receipt or be appended to the data set in the blockchain 700 after receipt.

The data set generated in step 808 may comprise one or more data items in addition to the Merkle root. As an example, the IEE apparatus 114 can optionally validate the energy allocations obtained in step 802 so as to obtain a validation result and include the validation result in the data set. The validation result for a particular validation may be selected from two possible validation results, such as positive (e.g., "true" or "yes") and negative (e.g., "false" or "no"). The validation result, as part of the data set, may the also be signed in step 810 (e.g., with the private signature key of the enclave 210). The trustless verification apparatus 116 may later verify the signature (and, thus, the validation result) using the public signature key of the enclave 210.

The energy allocations obtained in step 802 can be validated within the TEE 202A in various ways, for example based on information indicative of a total energy consumption, during the predetermined period of time, at the energy consumption sites C1, C2 involved in the exemplary energy allocations of Fig. 6 and a total energy production, during the predetermined period of time, at the energy production sites P1, P2 involved in the exemplary energy allocations of Fig. 6. The corresponding information, as illustrated in Fig. 5, is obtained by the TEE 202A of the IEE apparatus 114 from any suitable information source such as the energy allocation apparatus 112.

It will in the following be assumed that the energy allocation apparatus 112 is configured to forward the total consumption/production information (e.g., the measurement data sets as received per involved site C1, C2, P1, P2, see Fig. 4) to the IEE apparatus 114. The energy allocation apparatus 114 obtained this information directly from the involved consumption sites C1, C2 and production sites P1, P2, or via an intermediate domain.

As explained with reference to Fig. 4 above, the total consumption/production information as received in data sets from the various sites C1, C2, P1, P2 may be signed (and, optionally, encrypted) so as to rule out attacks and ensure privacy. To increase the level of trust, signature validation is performed within the TEE 202A. To this end, the TEE 202A needs to obtain the associated public keys, for example either directly from the involved sites C1, C2, P1, P2 (as illustrated by signaling step D in Fig. 7), from a central public key infrastructure, or otherwise. Using the appropriate public key, the TEE 202A validates the signature per measurement (optionally preceded by a decryption operation) in a first validation procedure. The corresponding validation result can be included in the data set generated in step 808. As an example, the validation result will be positive if all the signatures have successfully been validated.

In some variants, the total consumption/production information (e.g., the measurement data sets) is encrypted by the energy allocation apparatus 112 before it is forwarded to the IEE apparatus 114. In such variants, the IEE apparatus 114 will need to decrypt this information before signature validation.

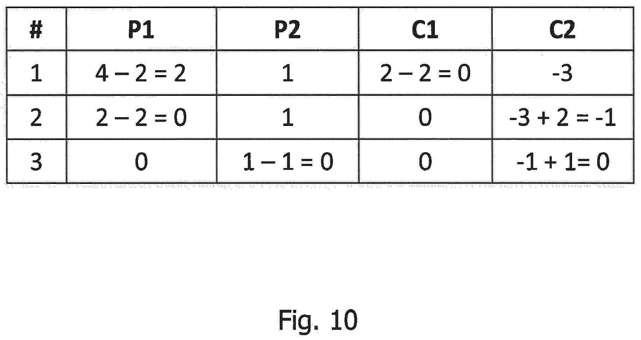

In a second validation procedure, the validation result depends on a determination (for energy consumptions/productions during the predetermined period of time) of whether or not an aggregated energy consumption per energy consumption site C1, C2 over the energy allocations and an aggregated energy production per energy production site P1, P2 over the energy allocations matches the total energy consumption at the respective energy consumption site C1, C2 and the total energy production at the respective energy production site P1, P2, respectively. Such a validation procedure is illustrated in Fig. 10.

Starting from the total energy consumption and production values for each involved site (see Fig. 5), the associated energy allocations (see Fig. 6) are individually added or subtracted in three separate validation steps #1, #2, and #3 as shown in Fig. 10. After the last validation step #3, the resulting value for each involved party C1, C2, P1, P2 has to be zero (i.e., has to be cleared), as illustrated in the last line of Fig. 10.

In this manner, it can be ensured that the aggregated energy amounts across the energy allocations involving a particular energy consumption site C1, C2 equal the total energy consumption at that particular energy consumption site C1, C2, and that the aggregated energy amounts across the energy allocations involving a particular energy production site P1, P2 equal the total energy production at that particular energy production site P1, P2. In other words, it can thus be ensured that, for example, a particular amount of energy produced at a particular energy production site P1, P2 is not assigned twice. The validation result will be positive, or "true", if the "energy accounts" of all sites C1, C2, P1, P2 involved in the energy allocations obtained in step 802 for the predetermined period of time can be cleared. Otherwise, the validation result will be negative, or "false".

In a third validation procedure, it is checked if the energy allocation algorithm as defined by a set of allocation rules and as applied by the energy allocation apparatus 112 (and obtained by the IEE apparatus 114 in step 802) is actually the same as one that has previously been stored within the TEE 202A (i.e., has not been tampered with). To this end, the TEE 202A applies its locally stored allocation algorithm to the total energy consumption(s) and the total energy production(s) to re-calculate the energy allocations and compares the re-calculated energy allocations with the energy allocations obtained in step 802. The validation result will be positive, or "true", if there is a full match between the re-calculated energy allocations and the obtained energy allocations. Otherwise, meaning that if there is any mismatch, the validation result will be negative, or "false".

Evidently, the validation result can also depend on the outcome of two or all of the first, second and third validation procedures. In such a case, the validation result will only be positive, or "true", if each individual validation procedure yielded a positive result.

The operations illustrated in Fig. 8 will repeatedly be performed in successive energy allocation cycles for successive, predetermined periods of time. As such, an individual data set (with an individual Merkle root) will be generated for each predetermined period of time.

Once a data set with the Merkle root (and the optional validation result) as generated by the IEE apparatus 114 has been output (and stored, e.g., in the blockchain 700 or any other distributed ledger, see step D in Fig. 7), it can be used by the parties involved in the energy allocations for trustless verification of the energy allocations. In more detail, such verification is performed by the trustless verification apparatus 116 (e.g., a smartphone or tablet computer) as illustrated in Figs. 1 and 3.

The trustless verification apparatus 116 will typically be operated by an operator of any particular one of the energy production sites P1, P2 and energy consumption sites C1, C2 and will have restricted access to all the energy allocations in which the respective site is involved, but not to any other energy allocation. This restricted access ensures privacy of information and defines a trust boundary.

With reference to the exemplary energy allocations illustrated in Fig. 6, this means that the trustless verification apparatus 116 associated with energy production site P1 will have access to information about the energy allocations identified by ID1 and ID2, but not to the energy allocation identified by ID3. In a similar manner, the trustless verification apparatus 116 associated with energy consumption site C1 will only have access to information about the energy allocation identified by ID3. As such, the operator of consumption site C1 cannot infer the energy allocations involving consumption site C2.

Such restricted access to individual energy allocations can be realized in various ways. For example, the energy allocation apparatus 112 may selectively forward information pertaining to a particular energy allocation (via a communication network) to the trustless verification apparatuses 116 of the operators of the exactly two sites C1, C2, P1, P2 involved in that energy allocation, or may provide such information for download upon request by the respective trustless verification apparatus 116. Alternatively, there may exist a dedicated server in the system 100 (not shown in Fig. 1) for providing such information to the respective trustless verification apparatus 116 within the domain of a particular energy production site P1, P2 or energy consumption site C1, C2

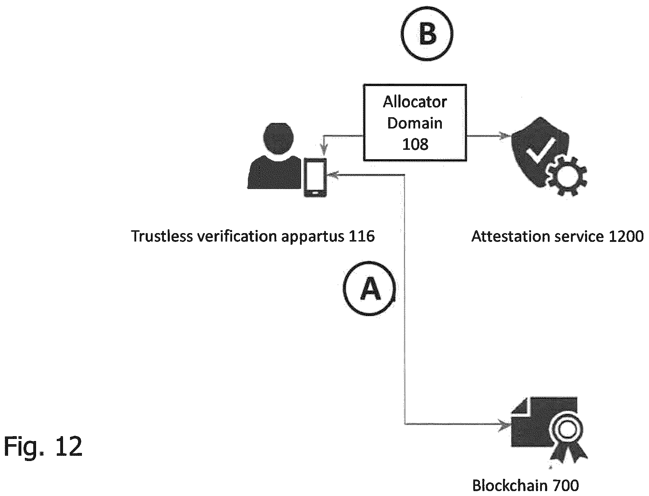

In the following, a method for trustless verification of energy allocations is described in more detail with reference to the flow diagram 1100 of Fig. 1. The method is performed by the trustless verification apparatus 116 associated with a particular energy consumption site C1, C2 or energy production site P1, P2 and for a particular predetermined period of time (as reflected, for example, by the timestamp of the involved energy allocations). The method will be described with reference to the signaling diagram illustrated in Fig. 12.

In step 1102, the trustless verification apparatus 116 obtains a data set comprising a Merkle root of a Merkle tree. The data set is obtained from the blockchain 700 (see step B in Fig. 12), where it has previously been stored by the IEE apparatus 114. As explained with reference to Figs. 8 and 9 above, the Merkle root in the data set obtained in step 1102 has been calculated by the TEE 202A of the IEE apparatus 114 from the energy allocations generated for a predetermined period of time and has been signed with a private key of the TEE 202A.

The data set may be retrieved from the blockchain 700 by the trustless verification apparatus 116 in various ways. For example, the trustless verification apparatus 116 may request the data set from the blockchain 700 by indicating at least one of a particular period of time denoting the energy allocation cycle for which the energy allocations are to be verified and an identifier of the allocator domain 108 that calculated the energy allocations. In some implementations, this information uniquely identifies the data set requested by the trustless verification apparatus 116 from the blockchain 700 that is to be returned to the trustless verification apparatus 116. In other implementations, this information uniquely identifies the data block(s) containing the data set of interest, and the trustless verification apparatus 116 may thus receive the data block(s) and identify therein the data set of interest.

In an optional step 1104, the trustless verification apparatus 116 obtains a public key of the TEE 202A, as indicated by step B in Fig. 12. That public key is associated with the signature key applied in step 810, so that the signature key may represent the private key corresponding to the public key obtained in step 1104. Step 1104 can be performed before, after or simultaneously with step 1102. Once obtained, the public key may remain permanently stored locally in memory 304 of the trustless verification apparatus 116 (see Fig. 3). As such, the public key of the TEE 202A may also be obtained from the memory 304 in step 1104 in case it has been stored there previously.

Then, in a further optional step 1106, the trustless verification apparatus 116 itself verifies the signature of the data set obtained in step 1102 using the public key of the TEE 202A received in step 1104. In an alternative implementation, in which step 1104 may be omitted, the trustless verification apparatus 116 is configured to trigger verification of the signature key, such as verification of its integrity or authenticity by a manufacturer of the TEE 202A. To this end, the trustless verification apparatus 116 itself, or another network node triggered by the trustless verification apparatus 116, may contact a network node in within the trust boundary of a manufacturer domain. The method may be aborted at this point if the signature cannot be positively verified, and an error message will then be output to an operator of the trustless verification apparatus 116. Of course, the method may likewise be aborted with an error message (e.g., immediately after step 1102) if the validation result derived by the TEE 202A, as optionally included in the data set obtained in step 1102, is negative.

Further, in step 1108, the method comprises obtaining at least one energy allocation for the particular energy consumption site C1, C2 or energy production site P1, P2 associated with the trustless verification apparatus 116. The at least one energy allocation may be received from the energy allocation apparatus 112 or any other server in the allocator domain 108. Step 1108 may be performed in any order relative to steps 1102 to 1106.

In step 1108, the trustless verification apparatus 116 typically obtains all its associated energy allocations for the particular period of time underlying the particular energy allocation cycle associated with the Merkle root received in step 1102. As explained above, the trustless verification apparatus 116 associated with a particular energy consumption site C1, C2 or energy production site P1, P2 only has access to, and only obtains, the energy allocations involving this particular energy consumption site C1, C2 or energy production site P1, P2.

The one or more energy allocations are obtained in step 1108 as plain-text information readily readable by the trustless verification apparatus 116 (e.g., in the form of the data sets illustrated in table Fig. 6 and denoted by letters a to f in Fig. 10). Thus, the trustless verification apparatus 116 is enabled to verify that the aggregated energy amount across the obtained energy allocations corresponds to the measurement of the associated energy meter 107 at the period of time associated with the obtained energy allocations. This measurement may have been locally stored at the corresponding site C1, C2, P1, or P2 prior to sending it towards the energy allocation apparatus 112 (see Fig. 4) for later use in step 1108. Moreover, the trustless verification apparatus 116 is also enabled to verify from the obtained energy allocations that any previously requested energy mix (that should have been considered by the allocation rules and should thus be reflected in the energy allocations) has actually been obtained. For example, it may have been requested that the energy mix consumed at energy consumption site C2 is delivered by two thirds from energy production site P1 and by one third from production site P2 (see energy allocations with IDs 2 and 3 in Fig. 6, that would then be obtained in step 1108).

It is evident that the above verifications can easily be tampered with on the side of the energy allocation apparatus 112 (or any man-in-the-middle). As such, it has to be ensured that the energy allocations obtained in step 1108 are "authentic". Authenticity of the energy allocations can be verified using the Merkle root obtained with the data set in step 1102 from the blockchain 700 and using further Merkle tree elements as follows.

In step 1110, the trustless verification apparatus 116 obtains one or more Merkle tree elements. The Merkle tree elements obtained in step 1110 may be received by the trustless verification apparatus 116 (e.g., upon request) from the energy allocation apparatus 112 or any server in the allocator domain 108. Step 1110 can be performed in any order relative to steps 1102 to 1108.

The Merkle tree elements obtained in step 1110 are selected from (i) one or more leaves derived from one or more energy allocations different from the least one energy allocation obtained in step 1108 and (ii) one or more intermediate nodes derived at least from one or more leaves associated with the one or more energy allocations different from the least one energy allocation obtained in step 1108 (and, optionally, additionally derived from the at least one energy allocation obtained in step 1108). As will be appreciated, the Merkle tree elements obtained in step 1110 take the form of hash values (see leaves and intermediate nodes in Fig. 9) and, therefore, do not have any particular informational content. As such, they do not disclose any information about energy allocations not involving the site associated with the particular trustless verification apparatus 116.

The Merkle tree elements obtained in step 1110 pertain to the Merkle tree calculated by the energy allocation apparatus 112 for the predetermined period of time underlying the particular energy allocation cycle associated with the Merkle root received in step 1102. As such, the Merkle tree elements obtained in step 1110 permit, in combination with the (hashed) allocations obtained in step 1108, to calculate in step 1112 at least a partial Merkle tree and, in particular, a part of the Merkle tree that permits to derive the associated Merkle root. In other words, this Merkle root will be derived from at least one leave derived from the at least one energy allocation obtained in step 1108 and from the one or more Merkle tree elements obtained in step 1110.

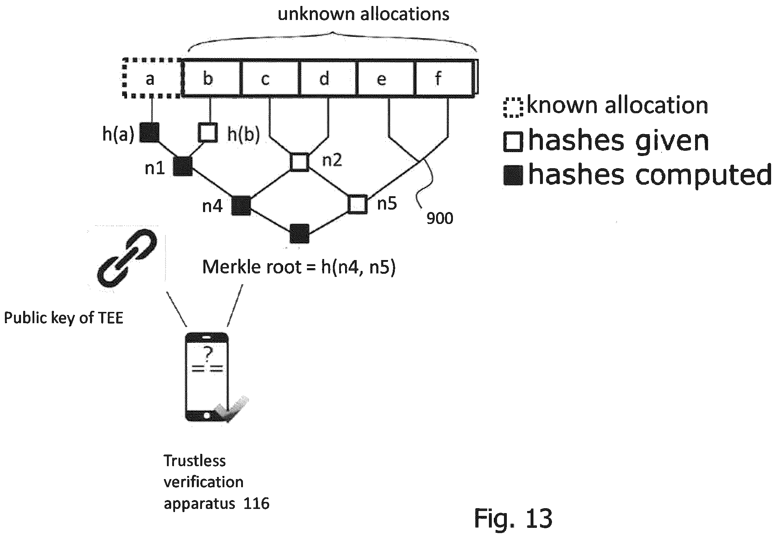

Calculation of the Merkle root in step 1112 is schematically illustrated in Fig. 13 for the exemplary six energy allocations "a" to "f" shown in Fig. 9. Here, it is exemplarily assumed that the energy allocation designated by "a" is the only energy allocation involving the site associated with the verification apparatus 116 during the pertinent predetermined period of time. The energy allocation designated by "a" will thus be obtained in step 1108 of Fig. 11 (e.g., in the form of a data set as illustrated in Fig. 6). The energy allocations designated by "b" to "f", on the other hand, do not involve the site associated with the verification apparatus 116 and shall therefore not be disclosed to the verification apparatus 116 in plaintext. What is disclosed to verification apparatus 116 are the hashes defined by Merkle tree elements indicated by non-filled boxes in Fig. 14. In the picture of Fig. 9, these Merkle tree elements comprise the leaf h(b) and the intermediate nodes n2 = h(h(c), h(d)) and n5 = h(n2, n3), with n3 = h(h(e), h(f)), as received in step 1110 of Fig. 11.

From the energy allocation designated by "a" as obtained in step 1108, the verification apparatus 116 calculates the hash h(a) in step 1112. From the hash h(a) thus calculated and the leaf h(b) as obtained in step 1110, the verification apparatus 116 calculates n1. Then, from n1 and n2 (the latter also obtained in step 1110), the verification apparatus 116 calculates n4, and from n4 and n5 (the latter also obtained in step 1110), the verification apparatus 116 calculates the Merkle root.

Once the Merkle root has been calculated in step 1112, the verification apparatus 116 verifies the energy allocations underlying the Merkle root obtained with the data set in step 1102 by comparing the latter Merkle root with the other Merkle root calculated in step 1112. In case both Merkle roots are identical, trustless verification was successful, meaning that authenticity of the energy allocations obtained in step 1102 has successfully been verified. In other words, it has then been verified that the Merkle root obtained in step 1102 and the energy allocations as obtained in step 1108 (and as underlying this Merkle root) have not been manipulated. If, on the other hand, the two Merkle roots compared in step 1114 are not identical, an error message is generated and output by the trustless verification apparatus 116.

As illustrated by step B in Fig. 12, a network node in the allocator domain 108 may contact (e.g., triggered by the trustless verification apparatus 116 or based on a predefined schedule, such as once per day or month) an attestation service 1200 associated with TEE 202A for an attestation, in an attestation verification report, of one or more of the program code executable in the TEE 202A and the hardware of the TEE 202A. The attestation verification report proves that the TEE 202A has indeed performed the various energy allocation validation procedures (discussed above in the context of Fig. 8) with certain (e.g., positive) results, which enables the trustless verification apparatus 116 to verify, for example, that a certain amount of energy has indeed been allocated only once, and not fraudulently multiple times. The attestation verification report is linked to the attestation quote as generated by the TEE 202A (e.g., by at least one corresponding identifier).

The attestation service 1200 is configured to sign the attestation verification report with a private signature key and send the attestation verification report to the allocator domain 108. The allocator domain 108 may, upon request, forward the signed attestation verification report to the trustless verification apparatus 116. The trustless verification apparatus 116 can check that the received attestation verification report has indeed been prepared by the attestation service 1200 by checking the signature that was applied to the attestation verification report by the attestation service 1200. To this end, the trustless verification apparatus 116 may request a public signature key of the attestation service 1200 (e.g., either from the attestation service 1200 directly or another source). A positive signature check indicates that the attestation verification report has not been modified in the allocator domain 108 and that the attestation verification report has indeed been generated for the program code and hardware of the TEE 202A.

In sum, the trustless verification apparatus 116 performs multiple checks that individually, but in particular in combination, permit a trustless verification of the energy allocations and the associated TEE 202A. In this context, the trustless verification apparatus 116 checks that the Merkle root calculated by the TEE 202A as obtained in step 1102 and the Merkle root newly re-calculated, inter alia, from the energy allocations obtained in step 1108 are the same. This proves authenticity of the energy allocations underlying the Merkle root calculated by the TEE 202A (i.e., that neither the Merkle root nor the underlying energy allocations have meanwhile been fraudulently modified). Further, the trustless verification apparatus 116 checks that the private signature as applied by the TEE 202A in step 810 to the data set that includes the Merkle root calculated by the TEE 202A matches the corresponding public signature as included in the attestation quote of the TEE 202A. As such, it can be verified that the data set was actually generated by certain program code in the enclave 210 of TEE 202A and by a certain TEE 202A. Further still, the trustless verification apparatus 116 checks the attestation verification report from the attestation service 1200 (as obtained via the allocator domain 108) by verifying the signature applied by the attestation service 1200 to that report using the public signature key of the attestation service 1200. Since the attestation verification report, in turn, is linked to the attestation quote, the circle of trust will thus be closed.

It will be appreciated that the present disclosure has been described with reference to exemplary embodiments that may be varied in many aspects. As such, the present invention is only limited by the claims that follow.

## Claims

1. An apparatus (114) for generating a data set that enables trustless verification of energy allocations between energy consumption sites (C1, C2) and energy production sites (P1, P2), the apparatus (114) being configured to
obtain (802) energy allocations relating to a predetermined period of time, wherein an individual energy allocation allocates a specific amount of energy (i) to energy consumption at an individual energy consumption site (C1, C2) during the predetermined period of time and (ii) to energy production at an individual energy production site (P1, P2) during the predetermined period of time;
calculate (804), in an isolated execution environment, IEE, (202A) leaves of a Merkle tree from the obtained energy allocations;
calculate (806) a Merkle root from the leaves of the Merkle tree;
generate (808) a data set including the Merkle root; and
output (812) the data set.

2. The apparatus of claim 1, configured to
obtain information pertaining to a total energy consumption, during the predetermined period of time, of one or more energy consumption sites (C1, C2) involved in the energy allocations and to a total energy production, during the predetermined period of time, of one or more energy production sites (P1, P2) involved in the energy allocations;
validate, in the IEE (202A), the obtained energy allocations based on the obtained information pertaining to the total energy consumption and the total energy production so as to generate a validation result; and
wherein the data set also comprises the validation result.

3. The apparatus of claim 2, wherein
the validation result depends on at least one determination selected from
1) determining whether or not at least one of an aggregated energy consumption per energy consumption site (C1, C2) over the energy allocations and an aggregated energy production per energy production site (P1, P2) over the energy allocations matches the total energy consumption of the respective energy consumption site (C1, C2) and the total energy production of the respective energy production site (P1, P2), respectively;
2) determining whether or not the obtained energy allocations conform to one or more predefined allocation rules by applying the allocation rules to the total energy consumption(s) and the total energy production(s) to re-calculate the energy allocations and comparing the re-calculated energy allocations with the obtained energy allocations.

4. The apparatus of claim 2 or 3, wherein
the information pertaining to the total energy consumption and the total energy production is obtained in the form of measurements locally performed at the one or more energy consumption sites (C1, C2) and at the one or more energy production sites (P1, P2) involved in the energy allocations, respectively.

5. The apparatus of claim 4, wherein
each measurement has been signed with a private key; and wherein the apparatus (114) is configured to validate each signed measurement using an associated public key.

6. The apparatus of claim 5, wherein
the measurements have locally been signed at the one or more energy consumption sites (C1, C2) and the one or more energy production sites (P1, P2) involved in the energy allocations.

7. The apparatus of any of the preceding claims, configured to sign (810) at least a portion of the data set before it is output.

8. The apparatus of any of the preceding claims, configured to
store the data set in at least one data storage (700) selected from a distributed ledger and a blockchain.

9. The apparatus of any of the preceding claims, wherein
the IEE is a trusted execution environment, TEE (202A).

10. A system comprising:
an apparatus (112) for calculating energy allocations, wherein an energy allocation allocates a specific amount of energy (i) to energy consumption at an individual energy consumption site (C1, C2) during a predetermined period of time and (ii) to energy production at an individual energy production site (P1, P2) during the predetermined period of time; and
an apparatus (114) according to any of the preceding claims and configured to obtain the calculated energy allocations.

11. An apparatus (116) for trustless verification of energy allocations between energy consumption sites (C1, C2) and energy production sites (P1, P2), wherein an energy allocation allocates a specific amount of energy (i) to energy consumption at an individual energy consumption site (C1, C2) during a predetermined period of time and (ii) to energy production at an individual energy production site (P1, P2) during the predetermined period of time, the apparatus (116) being associated with a particular energy consumption site (C1, C2) or energy production site (P1, P2) and configured to:
obtain (1102) a data set comprising a first Merkle root of a first Merkle tree, wherein the first Merkle root has been calculated from the energy allocations;
obtain (1108) at least one first energy allocation for the particular energy consumption site(C1, C2) or energy production site (P1, P2);
obtain (1110) one or more Merkle tree elements selected from (i) one or more leaves derived from one or more second energy allocations different from the at least one first energy allocation for the particular energy consumption site (C1, C2) or energy production site (P1, P2) and (ii) one or more intermediate nodes derived at least from one or more leaves associated with the one or more second energy allocations;
calculate (1112) a second Merkle root of a second Merkle tree comprising (i) at least one leave derived from the obtained at least one first energy allocation and (ii) the obtained one or more Merkle tree elements; and
verify (1114) the energy allocations underlying the first Merkle root by comparing the first Merkle root with the second Merkle root.

12. The apparatus of claim 11, configured to
verify at least one of program code executed in the IEE (202A) and hardware that executed the IEE (202A) based on information generated by an attestation service (1200) associated with the IEE (202A).

13. The apparatus of claim 11 or 12, configured to
obtain the data set from at least one data storage selected from a distributed ledger and a blockchain.

14. The apparatus of any of claims 11 to 13, configured to
obtain the one or more further Merkle tree elements from an allocator domain including in which the IEE is operated.

15. The apparatus of any of claim 11 to 14, wherein
the first Merkle root has been calculated in an isolated execution environment, IEE, (202A) and at least a portion of the data set has been signed by the IEE (202A), and wherein the apparatus (116) is configured to verify, or trigger verification of, the signature of the data set..

16. A method (800) for generating a data set that enables trustless verification of energy allocations between energy consumption sites (C1, C2) and energy production sites (P1, P2), the method comprising:
obtaining (802) energy allocations relating to a predetermined period of time, wherein an individual energy allocation allocates a specific amount of energy (i) to energy consumption at an individual energy consumption site (C1, C2) during the predetermined period of time and (ii) to energy production at an individual energy production site (P1, P2) during the predetermined period of time;
calculating (804), in an isolated execution environment, IEE, (202A) leaves of a Merkle tree from the obtained energy allocations;
calculating (806) a Merkle root from the leaves of the Merkle tree;
generating (808) a data set including the Merkle root; and
outputting (812 the data set.

17. The method of claim 16, performed by the apparatus (114) of any of claims 1 to 9.

18. A method (1100) for trustless verification of energy allocations between energy consumption sites (C1, C2) and energy production sites (P1, P2), wherein an energy allocation allocates a specific amount of energy (i) to energy consumption at an individual energy consumption site (C1, C2) during a predetermined period of time and (ii) to energy production at an individual energy production site (P1, P2) during the predetermined period of time, the method being performed for a particular energy consumption site (C1, C2) or energy production site (P1, P2) and comprising:
obtaining (1102) a data set comprising a first Merkle root of a first Merkle tree, wherein the first Merkle root has been calculated from the energy allocations;
obtaining (1108) at least one first energy allocation for the particular energy consumption site or energy production site;
obtaining (1110) one or more Merkle tree elements selected from (i) one or more leaves derived from one or more second energy allocations different from the at least one first energy allocation for the particular energy consumption site (C1, C2) or energy production site (P1, P2) and (ii) one or more intermediate nodes derived at least from one or more leaves associated with the one or more second energy allocations;
calculating (1112) a second Merkle root of a second Merkle tree comprising (i) at least one leave derived from the obtained at least one first energy allocation and (ii) the obtained one or more Merkle tree elements; and
verifying (1114) the energy allocations underlying the first Merkle root by comparing the first Merkle root with the second Merkle root.

19. The method of claim 18, performed by the apparatus (116) of any of claims 11 to 15.

20. A computer program product comprising program code portions for performing the steps of any of method claims 16 to 19 when executed on one or more processors.
